# EUROPEAN PATENT APPLICATION

(11) **EP 4 706 813 A1**
(43) Date of publication of application: **11.03.2026**
(21) Application number: 25768710.3
(22) Date of filing: 05.03.2025
(51) Int. Cl.: B01J 19/24

(54) **ELECTRIC HEATING REACTOR**

(30) Priority: 05.03.2024 KR 20240031399
(71) Applicant: LG Chem, Ltd., Seoul 07336 (KR)
(72) Inventor: PARK, Hongseok, Daejeon 34122 (KR); KWON, Hyun Jee, Daejeon 34122 (KR); KANG, Mooseong, Daejeon 34122 (KR); CHOI, Jaehoon, Daejeon 34122 (KR)
(74) Representative: Hoffmann Eitle
(86) International application number: PCT/KR2025/099572
(87) International publication number: WO 2025/188155

(57) **Abstract**

An electric heating reactor is disclosed. The electric heating reactor includes a reactor housing; at least one reaction tube extending in a first direction in the reactor housing; a pipe disposed in contact with or close to the at least one of the reaction tubes inside the reactor housing, and receiving heat from the at least one reaction tube or transferring heat to the at least one reaction tube; and a power source for supplying power to the at least one reaction tube to heat a reactant passing through the at least one reaction tube, wherein each reaction tube includes a tube inlet formed at one end and through which a reactant is introduced, and a tube outlet formed at the other end and through which a reacted product is discharged, and receives power from the power source to generate the heat, and the pipe includes a pipe inlet formed at one end and through which the reactant or steam is introduced and a pipe outlet formed at the other end and through which the preheated reactant or the heat-exchanged steam is discharged.

## Description

### BACKGROUND OF THE DISCLOSURE

### (a) Field of the Disclosure

### [Technical Field]

### CROSS-REFERENCE TO RELATED APPLICATION

This application claims priority to and the benefit of Korean Patent Application No. 10-2024-0031399 filed at the Korean Intellectual Property Office on March 5, 2024, the entire contents of which are incorporated herein by reference.

The present disclosure relates to an electric heating reactor, and more particularly, to an electric heating reactor in which a plurality of electrically heated reaction tubes are arranged inside a reactor housing to be used as a heat source, and a pipe is arranged inside the reactor housing to intersect the plurality of reaction tubes to generate steam or preheat a reactant with heat that may be lost to the outside of the plurality of reaction tubes, thereby improving energy efficiency.

### [Background Art]

In chemical industries, various facilities (e.g., crackers, reformers, reactors, and boilers) are maintained at a high temperature by using natural gas as a fuel. However, heating due to burning of natural gas is not only inefficient in terms of energy consumption, but also a major source of carbon emissions, making it difficult to address the climate change crisis.

Also, additional thermal energy may be consumed to preheat the reactants before introducing them into the reactor or to generate steam used in the reaction process. According to conventional technology of burning fuel, convective heat generated by combustion is utilized to preheat the reactants or generate the steam. However, in order to utilize the convection heat for preheating the reactants or generating the steam, a convection section for preheating the reactants or generating the steam must be provided separately from a radiant section where the fuel is combusted within the reactor to directly heat the reactants. Accordingly, the size of the reactor increases and the space occupied by the reactor in the reaction process increases.

Therefore, efforts are being made to increase energy efficiency and improve space utilization efficiency by replacing the heating method through the combustion of natural gas with electric heating.

The above information disclosed in this Background section is only for enhancement of understanding of the background of the disclosure, and therefore it may contain information that does not form the prior art that would already be known to a person of ordinary skill in the art.

### [Disclosure]

### [Technical Problem]

An embodiment of the present disclosure is to provide an electric heating reactor that heats a reactant through a plurality of reaction tubes electrically heated within a reactor housing and at the same time preheats the reactant or generates steam through a pipe arranged to intersect the plurality of reaction tubes.

### [Technical Solution]

An electric heating reactor according to an embodiment includes a reactor housing; at least one reaction tube extending in a first direction in the reactor housing; a pipe disposed in contact with or close to the at least one of the reaction tubes inside the reactor housing, and receiving heat from the at least one reaction tube or transferring heat to the at least one reaction tube; and a power source for supplying power to the at least one reaction tube to heat a reactant passing through the at least one reaction tube, wherein each reaction tube includes a tube inlet formed at one end and through which a reactant is introduced, and a tube outlet formed at the other end and through which a reacted product is discharged, and receives power from the power source to generate the heat, and the pipe includes a pipe inlet formed at one end and through which the reactant or steam is introduced and a pipe outlet formed at the other end and through which the preheated reactant or the heat-exchanged steam is discharged.

The at least one reaction tube may include a plurality of reaction tubes, and a spacing between a pair of adjacent reaction tubes may be the same as a spacing between another pair of adjacent reaction tubes.

The pipe may include at least one straight section arranged to intersect all of the plurality of reaction tubes.

The at least one straight section may include a plurality of straight sections, a spacing between a pair of adjacent straight sections may be equal to a spacing between another pair of adjacent straight sections, and the pipe may include at least one connecting section connecting the adjacent straight sections.

An insulator may be provided on an inner wall of the reactor housing.

Both ends of each reaction tube may be located outside the reactor housing, one of a pair of conductive sockets may be provided at each end portion of each reaction tube, and the power source may supply the power to each reaction tube through the pair of conductive sockets.

A first supply line may be connected to the tube inlet, a first discharge line is connected to the tube outlet, a second supply line may be connected to the pipe inlet, a second discharge line is connected to the pipe outlet, and at least one intermediate line may be connected at different positions in a middle section of the pipe.

The electric heating reactor may further include a first valve provided in the at least one intermediate line for opening or closing the corresponding intermediate line; and a second valve provided in the second discharge line for opening or closing the second discharge line.

A preheating temperature of the reactant or a temperature of the steam introduced into the pipe may be controlled according to a flow rate or a discharge position of the reactant or the steam.

The electric heating reactor may further include a connecting line connecting the second discharge line to the first supply line.

### [Advantageous Effects]

According to the present disclosure, the plurality of reaction tubes electrically heated may be arranged inside the reactor housing to be used as a heat source, and the pipe may be arranged inside the reactor housing to intersect the plurality of reaction tubes so as to generate the steam or preheat the reactant with heat that may be lost to the outside of the plurality of reaction tubes. Therefore, the energy efficiency of the electric heating reactor may be improved.

In addition, since multiple reaction tubes and the pipe are arranged together in the space within the reactor housing, a space utilization efficiency may be improved and the process may be simplified.

Further, effects that may be obtained or expected from exemplary embodiments of the present disclosure are directly or suggestively described in the following detailed description. That is, various effects expected from exemplary embodiments of the present disclosure will be described in the following detailed description.

### [Description of the Drawings]

Embodiments of the present disclosure may be better understood by reference to the following description taken in conjunction with the accompanying drawings in which like reference numerals designate identical or functionally similar elements.
FIG. 1 is a schematic diagram illustrating an electric heating reactor according to an embodiment of the present disclosure.
FIG. 2 is a schematic diagram illustrating an electric heating reactor according to another embodiment of the present disclosure.
FIG. 3 is a schematic diagram illustrating an electric heating reactor according to another embodiment of the present disclosure.

It should be understood that the above-referenced drawings are not necessarily to scale, presenting a somewhat simplified representation of various preferred features illustrative of the basic principles of the disclosure. The specific design features of the present disclosure, including, for example, specific dimensions, orientations, locations, and shapes, will be determined in part by the particular intended application and use environment.

### [Mode for Invention]

The terminology used herein is for the purpose of describing particular embodiments only, and is not intended to limit the present disclosure. As used herein, singular forms are also intended to include a plurality of forms, unless the context clearly indicates otherwise. It should be further understood that term "comprise" or "have" used in the present specification specifies the presence of stated features, numerals, steps, operations, components, parts, or a combination thereof, but does not preclude the presence or addition of one or more other features, numerals, steps, operations, components, parts, or a combination thereof. Also, as used herein, the term "and/or" includes any plurality of combinations of items or any of a plurality of listed items.

Additionally, it is to be understood that one or more of the following methods or aspects thereof may be executed by at least one controller. The term "controller" may refer to a hardware device that includes a memory and a processor. The memory is configured to store program instructions, and the processor is specifically programmed to execute the program instructions to perform one or more processes described in further detail below. The controller, as described herein, may control operations of units, modules, components, devices, or similar elements. Furthermore, it is to be understood that the following methods can be executed by a device that includes a controller along with one or more other components, as would be recognized by those skilled in the art.

Additionally, the controller of the present disclosure may be implemented as a non-transitory computer-readable recording medium containing executable program instructions executed by a processor. Examples of the computer-readable recording media include, but are not limited to, a ROM, a RAM, a compact disc (CD) ROM, a magnetic tape, a floppy disk, a flash drive, a smart card, and an optical data storage device. The computer-readable recording medium may also be distributed across a computer network so that program instructions can be stored and executed in a distributed manner, such as on a telematics server or a controller area network (CAN).

According to the present disclosure, an electric heating reactor includes at least one reaction tube extending in a first direction in a reactor housing, and a pipe arranged inside the reactor housing so as to intersect at least one reaction tube and receive heat from at least one reaction tube or transfer heat to at least one reaction tube. A reactant passes through the interior of at least one reaction tube, and at least one reaction tube is electrically heated to electrically heat the reactant passing through the interior thereof. Therefore, no harmful gases or greenhouse gases such as carbon dioxide are generated during the heating process of the reactants.

In one example, the reactant that needs to be preheated or steam passes through the interior of the pipe, and the pipe receives heat from at least one reaction tube so that the reactant is preheated or steam is generated. Energy efficiency may be improved by preheating the reactants or generating the steam by using heat that would otherwise be lost to the outside of at least one reaction tube.

In another example, hot steam passes through the interior of the pipe, and the pipe transfers the heat of the steam to at least one reaction tube, thereby reducing the temperature deviation according to the position of the reaction tube. Therefore, in the case of an endothermic reaction, the formation of cold spots may be suppressed.

The pipe includes at least one straight section intersecting at least one reaction tube. At least one straight section includes a plurality of straight sections, and the pipe includes at least one connecting section connecting the adjacent straight sections. At least one reaction tube includes a plurality of reaction tubes. The plurality of reaction tubes are arranged uniformly-i.e., with an equal interval from each other-and the plurality of straight sections are arranged uniformly-i.e., with an equal interval from each other. Accordingly, the inside of the reactor housing may be evenly heated, and the temperature of the generated steam may be controlled depending on the location of the steam discharge, etc.

Hereinafter, embodiments of the present disclosure will be described in detail with reference to attached drawings.

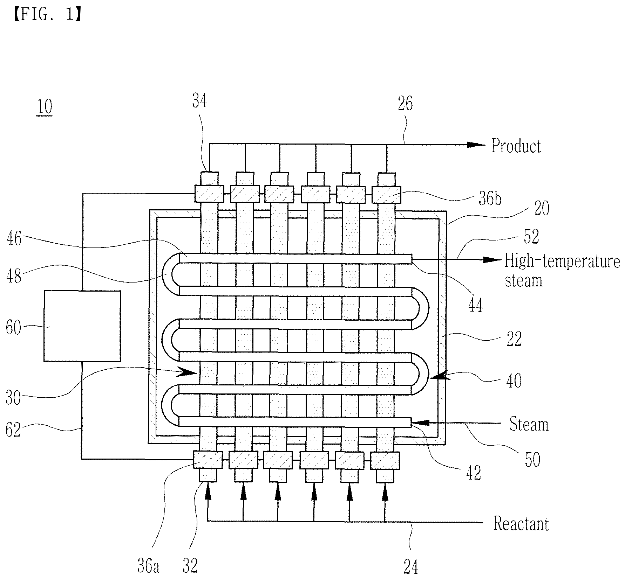

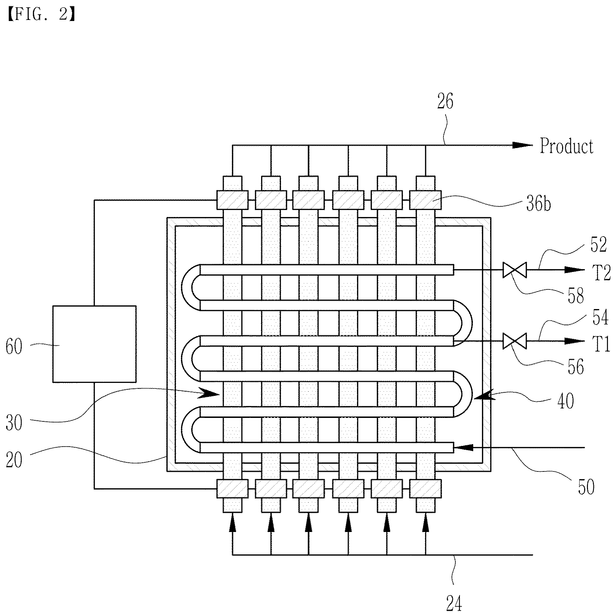

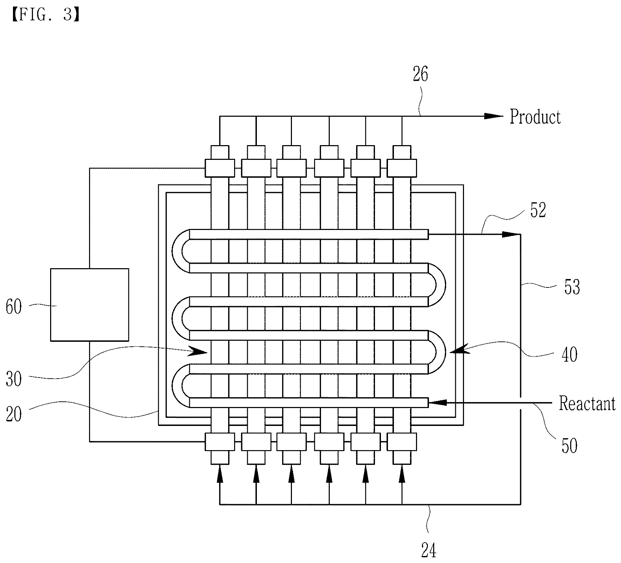

FIG. 1 is a schematic diagram illustrating an electric heating reactor according to an embodiment of the present disclosure. FIG. 2 is a schematic diagram illustrating an electric heating reactor according to another embodiment of the present disclosure. FIG. 3 is a schematic diagram illustrating an electric heating reactor according to another embodiment of the present disclosure.

As illustrated in FIG. 1 to FIG. 3, an electric heating reactor 10 according to embodiments of the present disclosure includes a reactor housing 20, at least one reaction tube 30, a pipe 40, a power source 60, and a pair of conductive sockets (first and second conductive sockets 36a and 36b).

The reactor housing 20 may have a cylindrical shape or a square column shape of a hollow space, but the shape of the reactor housing 20 is not particularly limited thereto. An insulator is provided on the inner wall of the reactor housing 20 to insulate the inside of the reactor housing 20. That is, the heat inside the reactor housing 20 is not transferred to the outside of the reactor housing 20 but is used within the reactor housing 20, thereby improving energy efficiency.

At least one reaction tube 30 is arranged in a first direction inside the reactor housing 20. At least one reaction tube 30 includes a plurality of reaction tubes 30, and the plurality of reaction tubes 30 may be arranged parallel to each other. Additionally, the spacing between a pair of neighboring reaction tubes 30 may be the same as the spacing between another pair of neighboring reaction tubes 30. That is, the plurality of reaction tubes 30 may be uniformly arranged. Accordingly, the interior of the reactor housing 20 may be uniformly heated by the plurality of reaction tubes 30.

Each reaction tube 30 is configured to receive power, generate heat, and use the generated heat to transfer the heat to the reactant inside each reaction tube 30. To this end, each reaction tube 30 is manufactured from an alloy material having high resistivity (e.g., Ni-Cr, Fe-Cr, Fe-Ni-Cr, Fe-Cr-Al, etc.), and a passage through which the reactant passes is formed in the longitudinal direction (e.g., the first direction) inside the tube. For example, each reaction tube 30 may be formed in an annular pipe shape so that a passage may be formed in the longitudinal direction therein. However, the shape of each reaction tube 30 is not limited to the circular pipe shape. Since each of the reaction tubes 30 has high resistivity, when electric power is applied to each of the reaction tubes 30, heat is generated in each of the reaction tubes 30, and heat can be transferred to the reactants in the passage. Additionally, each reaction tube 30 can release a portion of the generated heat to the outside of each reaction tube 30 or receive heat from the outside of the reaction tube 30 (i.e., the inside of the reactor housing 20).

Both ends of each reaction tube 30 are positioned outside the reactor housing 20, and one of a pair of conductive sockets 36a and 36b is provided at each end of each reaction tube 30. A tube inlet 32 is formed at one end of each reaction tube 30, and the tube inlet 32 is connected to the first supply line 24. The first supply line 24 is connected to a reactant supply source (not shown), and the reactant required for a reaction is introduced into each reaction tube 30 through the first supply line 24 and the tube inlet 32. A tube outlet 34 is formed at the other end of each reaction tube 30, and the tube outlet 34 is connected to a first discharge line 26. The products of the reaction that have been completed and/or the unreacted product of the reaction that have not been completed are discharged from each reaction tube 30 through the tube outlet 34 and flow into the first discharge line 26.

The pipe 40 is arranged within the reactor housing 20 to receive heat emitted from at least one reaction tube 30 to heat the reactant or the steam within the pipe 40, or to transfer the heat of the hot steam flowing within the pipe 40 to at least one reaction tube 30. The above pipe 40 may be placed in contact with at least one reaction tube 30 or may not be placed in contact with at least one reaction tube 30, but may be placed near at least one reaction tube 30 so that the heat transfer may sufficiently occur between the reactant or steam inside the pipe 40 and the reactant inside the at least one reaction tube 30.

The pipe 40 includes one end and the other end, and both ends of the pipe 40 may be located inside the reactor housing 20 or outside the reactor housing 20. A pipe inlet 42 is formed at one end of the pipe 40, and the pipe inlet 42 is connected to a second supply line 50. The second supply line 50 is connected to a reactant supply source (not shown) or a steam supply source (not shown), and the reactant requiring preheating or low-temperature steam or water or high-temperature steam is introduced into the pipe 20 through the second supply line 50 and the pipe inlet 42. A pipe outlet 44 is formed at the other end of the pipe 40, and the pipe outlet 44 is connected to a second discharge line 52. The preheated reactant or the steam or water that has received the heat from at least one reaction tube 30 or has transferred the heat to at least one reaction tube 30 may flow through the pipe outlet 44 to the second discharge line 52.

The reactant or steam introduced into the pipe 40 through the pipe inlet 42 may have a preheating temperature or steam temperature controlled according to a flow rate or discharge location thereof. For example, as shown in FIG. 2, at least one intermediate line 54 is connected at different locations in the middle section of the pipe 40, a first valve 56 for opening or closing at least one intermediate line 54 may be provided, and a second valve 58 for opening or closing the second discharge line 52 may be provided in the second discharge line 52. In this case, the temperature of the reactant or steam passing through the pipe 40 may vary depending on the distance flowed within the pipe 40 based on the type of the reaction (e.g., an exothermic reaction or an endothermic reaction) occurring within at least one reaction tube 30. In one example, if the reaction occurring in at least one reaction tube 30 is an endothermic reaction, a temperature T1 of the reactant or steam flowing through the intermediate line 54 is lower than a temperature T2 of the reactant or steam flowing through the second discharge line 52. In another example, if the reaction occurring in at least one reaction tube 30 is an exothermic reaction, the temperature T1 of the reactant or steam flowing through the intermediate line 54 is higher than the temperature T2 of the reactant or steam flowing through the second discharge line 52. Therefore, by connecting the intermediate line 54 to the location of the pipe 40 through which the reactant or steam of the target temperature passes, opening the first valve 56 and closing the second valve 58, the reactant or steam of the target temperature may be obtained through the intermediate line 54.

Meanwhile, depending on the type of the reaction occurring within at least one reaction tube 30 (e.g., the exothermic reaction or the endothermic reaction), the low-temperature steam may be supplied to the pipe inlet 42 to cool the reactant within at least one reaction tube 30, or the high-temperature steam may be supplied to the pipe inlet 42 to heat the reactant within at least one reaction tube 30, thereby controlling the temperature distribution or deviation within at least one reaction tube 30. In one example, if the reaction occurring within at least one reaction tube 30 is the exothermic reaction, the low-temperature steam may be supplied to the pipe inlet 42 to cool the reactant within at least one reaction tube 30, thereby alleviating the local difference in the reaction heat and reducing the temperature deviation. In another example, if the reaction occurring within at least one reaction tube 30 is the endothermic reaction, the local difference in the reaction heat and the temperature deviation may be reduced by supplying the high-temperature steam to the pipe inlet 42 to heat the reactant within at least one reaction tube 30. Accordingly, the occurrence of cold spots may be suppressed.

To ensure the smooth heat transfer between the reactant within at least one reaction tube 30 and the reactants or steam within the pipe 40, the pipe 40 is arranged within the reactor housing 20 so as to intersect at least one reaction tube 30. In one example, the pipe 40 includes at least one straight section 46, and the at least one straight section 46 may intersect all reaction tubes 30. In another example, at least one straight section 46 includes a plurality of straight sections 46, and the pipe 40 further includes at least one connecting section 48 connecting the adjacent straight sections 46. In this case, each straight section 46 may intersect all reaction tubes 30. For example, one straight section 46 may be arranged parallel to another straight section 46, and each straight section 46 may be arranged in a second direction perpendicular to the first direction or may be arranged to be inclined by an angle that may intersect all the reaction tubes 30 to the second direction.

The pipe 40 may preheat the reactant passing through the interior thereof and supply the preheated reactant to at least one reaction tube 30. For example, as illustrated in FIG. 3, the electric heating reactor 10 further includes a connecting line 53, and the connecting line 53 connects the second discharge line 52 to the second supply line 50 so that a fluid flows therethrough. Accordingly, the preheated reactant passing through the pipe 40 is discharged to the second supply line 50, and the reactant is supplied to at least one reaction tube 30 sequentially through the connecting line 53 and the second supply line 50.

The power source 60 is configured to supply power to at least one reaction tube 30. The power source 60 may be an AC power source or a DC power source.

The pair of conductive sockets 36a and 36b electrically connect the power source 60 and each reaction tube 30. When the power source 60 supplies power to each reaction tube 30 through the pair of conductive sockets 36a and 36b, each reaction tube 30 generates heat. The heat is transferred to the reactant passing through the interior of each reaction tube 30, thereby heating the reactant. The first conductive socket 36a is mounted on one end of each reaction tube 30 and electrically connects the power source 60 and one end of each reaction tube 30 through a wire 62. In addition, the second conductive socket 36b is mounted on the other end of each reaction tube 30 and electrically connects the power source 60 and the other end of each reaction tube 30 through the wire 62. Accordingly, the power from the power source 60 is supplied to each reaction tube 30 through the first and second conductive sockets 36a and 36b, and each reaction tube 30 generates the heat to be transferred to the reactants passing through each reaction tube 30.

While this disclosure has been described in connection with what is presently considered to be practical embodiments, it is to be understood that the disclosure is not limited to the disclosed embodiments. On the contrary, it is intended to cover various modifications and equivalent arrangements included within the spirit and scope of the appended claims.

## Claims

1. An electric heating reactor, comprising:
a reactor housing;
at least one reaction tube extending in a first direction in the reactor housing;
a pipe disposed in contact with or close to the at least one reaction tube inside the reactor housing, and receiving heat from the at least one reaction tube or transferring heat to the at least one reaction tube; and
a power source for supplying power to the at least one reaction tube to heat a reactant passing through the at least one reaction tube;
wherein each reaction tube includes a tube inlet formed at one end and through which a reactant is introduced, and a tube outlet formed at the other end and through which a reacted product is discharged, and receives power from the power source to generate the heat, and
the pipe includes a pipe inlet formed at one end and through which the reactant or steam is introduced and a pipe outlet formed at the other end and through which the preheated reactant or the heat-exchanged steam is discharged.

2. The electric heating reactor of claim 1, wherein:
the at least one reaction tube includes a plurality of reaction tubes, and
a spacing between a pair of adjacent reaction tubes is the same as a spacing between another pair of adjacent reaction tubes.

3. The electric heating reactor of claim 2, wherein:
the pipe includes at least one straight section arranged to intersect all of the plurality of reaction tubes.

4. The electric heating reactor of claim 3, wherein:
the at least one straight section includes a plurality of straight sections,
a spacing between a pair of adjacent straight sections is equal to a spacing between another pair of adjacent straight sections, and
the pipe includes at least one connecting section connecting the adjacent straight sections.

5. The electric heating reactor of claim 1, wherein:
an insulator is provided on an inner wall of the reactor housing.

6. The electric heating reactor of claim 1, wherein:
both end portions of each reaction tube are located outside the reactor housing,
one of a pair of conductive sockets is provided at each end portion of each reaction tube, and
the power source supplies the power to each reaction tube through the pair of conductive sockets.

7. The electric heating reactor of claim 1, wherein:
a first supply line is connected to the tube inlet, a first discharge line is connected to the tube outlet,
a second supply line is connected to the pipe inlet, a second discharge line is connected to the pipe outlet, and
at least one intermediate line is connected at different positions in a middle section of the pipe.

8. The electric heating reactor of claim 7, further comprising:
a first valve provided in the at least one intermediate line for opening or closing the corresponding intermediate line; and
a second valve provided in the second discharge line for opening or closing the second discharge line.

9. The electric heating reactor of claim 8, wherein:
a preheating temperature of the reactant or a temperature of the steam introduced into the pipe is controlled according to a flow rate or a discharge position of the reactant or the steam.

10. The electric heating reactor of claim 7, further comprising:
a connecting line connecting the second discharge line to the first supply line.
